(19) Europäisches Patentamt
European Patent Office
Office européen des brevets

(11) Publication number: 0 025 832 B1

(12) # EUROPEAN PATENT SPECIFICATION

(45) Date of publication of patent specification: 16.11.83

(51) Int. Cl.³: G 02 B 27/10

(21) Application number: 80104203.7

(22) Date of filing: 17.07.80

(54) **Beam-splitting optical system.**

(30) Priority: 29.08.79 US 70568

(43) Date of publication of application: 01.04.81 Bulletin 81/13

(45) Publication of the grant of the patent: 16.11.83 Bulletin 83/46

(84) Designated Contracting States: CH DE FR GB IT LI NL

(56) References cited:
FR - A - 2 134 272
US - A - 3 536 380
US - A - 3 748 015

(73) Proprietor: THE PERKIN-ELMER CORPORATION
Main Avenue
Norwalk Connecticut 06432 (US)

(72) Inventor: Offner, Abe
100 Leeuwarden Road
Darien Connecticut 06820 (US)
Inventor: Markle, David A.
18 Weatherbell Drive
Norwalk Connecticut 06851 (US)

(74) Representative: Patentanwälte Dipl.-Ing. A. Grünecker, Dr.-Ing. H. Kinkeldey, Dr.-Ing. W. Stockmair,
Dr. rer. nat. K. Schumann, Dipl.-Ing. P.H. Jakob,
Dr. rer. nat. G. Bezold Maximilianstrasse 58
D-8000 München 22 (DE)

EP 0 025 832 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Beam-splitting optical system

The invention is related to an optical system for insertion into projection apparatus to permit viewing an image projected on an image plane without affecting its quality, size or position comprising a beam splitting element disposed in the optical path of the light before the image plane so that said beam splitting element will transmit the radiation to the image plane and reflect a portion of the radiation reflected from the image plane in a direction which permits viewing, and means disposed in said optical path to correct for aberrations caused by said beam splitting element, and said optical system being of unit magnification.

The invention is also related to a microprojection system for forming an image of a mask on a light sensitive wafer comprising a beam splitting element disposed in the optical path of the light before the image plane so that said beam splitting element will transmit the radiation to the image plane and reflect a portion of the radiation reflected from the image plane in a direction which permits viewing.

The US—A—3536380 discloses such an optical system as well as such a microprojection system. As a means for correcting aberrations caused by the beam splitting element a meniscus lens is used through which the light projecting an image passes a first time and is then reflected by a concave mirror for passing a second time the meniscus lens. Since this system requires a concave mirrir it can only be used with a very specific projection apparatus.

For instance a projection apparatus as described in the US—A—3748015 would not allow the insertion of such an optical system.

FR—A—2134272 discloses an optical system for forming a real image with unit magnification of an object. This optical system is applicable for projecting a mask on a wafer. However, this known optical system does not comprise a separated optical path for viewing. This known optical system is designed such that the size of the image is independent of the position of the object and the plane on which the image is formed.

The invention as claimed solves the problem to provide an optical system for insertion into projection apparatus permitting viewing of an image projected onto an image plane without introducing distortion.

The optical system according to the invention is particularly adapted, among other possible uses, for use as an insertion in the optical train used in microprojection apparatus to provide access to the image of a mask on a light sensitive wafer in order to closely align the image with the pattern on the wafer. A particular advantage of the optical system according to the invention is that its insertion in an optical system already existing does not affect the quality, size, or position of the image.

The optical system according to the invention could be inserted in the optical train used in microprojection apparatus shown and described in the afore-mentioned US—A—3748015. This known apparatus forms a substantially faultless image. The insertion of an optical system according to the invention into such an already corrected system would not give rise to any aberrations of the image.

The optical system according to the invention is the optical equivalent of a zero thickness pellicle beam splitter. The optical system is particularly advantageous in so far as it is afocal so that it will remain at unit magnification when it is shifted longitudinally and the image position is insensitive to longitudinal displacement.

An embodiment of the optical system according to the invention is characterized in that a tiltable plane parallel plate element is disposed between the meniscus element for adjusting the position of the image laterally.

Another embodiment of the optical system according to the invention is characterized in that each element of the optical system is afocal so that the optical system remains at unit magnification and insensitive to changes in the spacing between the elements.

Another embodiment of the optical system according to the invention is characterized by said beam splitting element being disposed in the optical path between said image plane and said meniscus lens element.

A further embodiment of the optical system according to the invention is characterized by said beam splitting element being disposed in the optical path between said meniscus lens elements.

A further embodiment of the optical system according to the invention is characterized in that said beam splitting element is disposed in the optical path between said tiltable plane parallel plate and the second meniscus lens element.

A particular embodiment of an optical system according to the invention is characterized by the construction data included in the characterizing portion of claim 8.

Preferably the system, according to the invention, is corrected' for coma, distortion, and lateral colour, making the system insensitive to small lateral displacements and tilts.

Several ways of carrying out the invention are described in detail below with reference to drawings which illustrate several specific embodiments, in which;

Figure 1 is an optical schematic of a first embodiment of the present invention.

Figure 2 is an optical schematic of an alternate embodiment of the present invention.

Figure 3 is an optical schematic of still another embodiment of the invention.

Figure 1 illustrates a first embodiment of the present invention. Shown in solid lines are projected rays 11 which, in microprojection apparatus, image a mask on an image plane 13, e.g., a wafer. Without the requirement for being able to observe what is being imaged thereon, those rays could be projected directly onto the image plane 13. However, as previously described, there is a need to observe what is being projected in order to closely align the image of the mask with the pattern on the wafer. To accomplish this, a beam splitting element which may, for example, be a beam splitting cube 15, is inserted in the optical path. The light rays pass through this beam splitting cube to the image plane; however, because of the insertion of the beam splitting cube 15, a portion of the light rays 11 which pass through the beam splitting cube 15 and are reflected off the wafer return to the beam splitting cube and are reflected by the diagonal surface thereof to a viewing device, as indicated by the rays 17. However, the beam splitting cube causes image displacement and aberrations. In accordance with the present invention in order to correct this, in other words, to insure convergence at the same image point in the image plane 13, an afocal unity magnification optical system 19 comprising two meniscus elements 21 and 23, each of which is afocal, is inserted in the optical path. That is, the optical system including the beam splitting cube is unit power. By making the system afocal insures that it will remain at unit magnification when the conjugates are changed, as happens when it is shifted longitudinally. Also, the image position is insensitive to longitudinal displacements. It is noted that in some microprojection applications it is desirable to swing or pivot as a unit the entire optical system, elements 15, 21, 23, into and out of the path of the projected rays 11. Because the optical system is afocal and of unit magnification, the image position is insensitive to longitudinal displacements, which result from the mechanical tolerances required for such movement.

Further, by making each component of the optical system afocal, the system remains afocal even if the separation between the lens elements changes. This is a useful, practical feature since the lens separation can be adjusted during assembly to put the image at the desired location.

The dashed lines 25 on Fig. 1 illustrate the manner in which the correction takes place. The refraction within the lenses 21 and 23 cause the rays entering the beam splitting cube 15 to deviate from the position they would normally take were the lenses 21 and 23 not present. This compensates for refraction within the beam splitting cube so that, upon exiting from the beam splitting cube 15, the rays follow the same path as they would have had all the elements of the present invention not been inserted. In this manner, the errors introduced by the beam splitting cube, which is necessary in order to view the positioning and the alignment of the mask image on the wafer, are compensated.

Figure 2 illustrates an alternate embodiment of the present invention. In this embodiment, all of the same elements are present; however, their locations are changed. In this embodiment a beam splitting cube 15a is disposed between two meniscus lenses 21 and 23a. The two systems are optically equivalent and the same type of corrections as took place in Fig. 1 take place in the embodiment of Fig. 2.

Another embodiment of the invention is shown in Fig. 3. This embodiment is similar to the embodiment of Fig. 2 as it includes a beam splitting cube 15a disposed between the two meniscus lenses 21 and 23a. In addition, the embodiment of Fig. 3 includes a tiltable plane parallel plate 27 inserted between the meniscus elements 21 and 23a. The insertion of this plate provides a very useful, practical feature because it is used to adjust the position of the image laterally. This relieves the otherwise very tight tolerances on the wedge and squaring on the beam splitting cube and meniscus lenses. Thus, the system is corrected for coma distortion and lateral color, which makes it insensitive to small lateral displacements and tilts.

Table 1 is an example, indicating the construction data, of the optical system of Fig. 3.

The distance from surface S1 to the image plane is 58.4 mm and the distance from the surface S8 to the image plane is 3.0 mm.

It will thus be seen that the present invention does indeed provide a new optical system for insertion into projection apparatus for viewing an image projected on an image plane without affecting its quality, size or position.

TABLE 1

| Surface number | Radius (mm) | Glass thickness (mm) | Glass type | Index of refraction .5600μm | .5200μm | .6000μm | Air separation (mm) |
|---|---|---|---|---|---|---|---|
| S1 | 24.48(cx) | 3.93 | BK-7 | 1.5180 | 1.5202 | 1.5163 | |
| S2 | 23.14(cc) | | | | | | 28.97 |
| S3 | ∞ (plane) | 2.00 | F-2 | 1.6226 | 1.6272 | 1.6190 | |
| S4 | ∞ (plane) | | | | | | 8.74 |
| S5 | ∞ (plane) | 7.00 | F-2 | 1.6226 | 1.6272 | 1.6190 | |
| S6 | ∞ (plane) | | | | | | 2.26 |
| S7 | 14.72(cc) | 2.50 | BK-7 | 1.5180 | 1.5202 | 1.5163 | |
| S8 | 15.57(cx) | | | | | | 3.00 |

Spectral range $.5200\mu m \leq \lambda \leq .6000\mu m$

**Claims**

1. An optical system (19) for insertion into projection apparatus to permit viewing an image projected on an image plane (13) without affecting its quality, size or position comprising a beam splitting element (15; 15a) disposed in the optical path of the light before the image plane (13) so that said beam splitting element (15; 15a) will transmit the radiation to the image plane (13) and reflect a portion of the radiation reflected from the image plane (13) in a direction which permits viewing, and means (21, 23; 21, 23a) disposed in said optical path to correct for image displacement and aberrations caused by said beam splitting (15; 15a) element, and said optical system (19) being of unit magnification, characterized in that said means for correcting for image displacement and aberrations comprises first and second meniscus lens elements (21, 23; 21, 23a) having their concave surfaces facing each other and that said optical system (19) is afocal.

2. An optical system according to claim 1, characterized in that a tiltable plane parallel plate element (27) is disposed between the meniscus elements (21, 23a) for adjusting the position of the image laterally.

3. The optical system according to claim 1, wherein each element (21, 23, 23a, 27) of the optical system is afocal so that the optical system (19) remains at unit magnification and is insensitive to changes in the spacing between the elements (21, 23, 23a, 27).

4. An optical system according to one of claims 1 to 3, wherein said beam splitting element (15) is disposed in the optical path between said image plane (13) and said meniscus lens elements (21, 23).

5. An optical system according to one of the claims 1 to 3, wherein said beam splitting element (15a) is disposed in the optical path between said meniscus lens elements (21, 23a).

6. An optical system according to claim 2, wherein said beam splitting element (15a) is disposed in the optical path between said tiltable plane parallel plate (27) and the second meniscus lens (23a) element.

7. An optical system according to claim 6, wherein said optical system (19) is characterized by the following construction data:

| Surface number | Radius (mm) | Glass thickness (mm) | Glass type | Index of refraction .5600$\mu$m | .5200$\mu$m | .6000$\mu$m | Air separation (mm) |
|---|---|---|---|---|---|---|---|
| S1 | 24.48(cx) | 3.93 | BK-7 | 1.5180 | 1.5202 | 1.5163 | |
| S2 | 23.14(cc) | | | | | | 28.97 |
| S3 | ∞ (plane) | 2.00 | F-2 | 1.6226 | 1.6272 | 1.6190 | |
| S4 | ∞ (plane) | | | | | | 8.74 |
| S5 | ∞ (plane) | 7.00 | F-2 | 1.6226 | 1.6272 | 1.6190 | |
| S6 | ∞ (plane) | | | | | | 2.26 |
| S7 | 14.72(cc) | 2.50 | BK-7 | 1.5180 | 1.5202 | 1.5163 | |
| S8 | 15.57(cx) | | | | | | 3.00 |

Spectral range $.5200\mu m \leq \lambda \leq .6000\mu m$ and distance from S1 to image plane=58.4mm and distance from S8 to image plane=3.0mm.

8. A microprojection system for forming an image of a mask on a light sensitive wafer comprising a beam splitting element (15, 15a) disposed in the optical path of the light before the image plane (13) so that said beam splitting element (15, 15a) will transmit the radiation to the image plane (13) and reflect a portion of the radiation reflected from the image plane (13) in a direction which permits viewing, characterized in that first and second meniscus lens elements (21, 23; 21, 23a) are provided having their concave surfaces facing each other and being disposed in the optical path to correct for image displacement and aberrations caused by said beam splitting element (15; 15a); and each of said elements being afocal.

9. A microprojection system according to claim 8, characterized in that said beam splitting element (15a) is disposed in the optical path between said meniscus lens elements (21, 23a), and in that a tiltable plane parallel plate element (27) is disposed in the optical path between the first meniscus lens (21) and the beam splitting element (15a) for adjusting the position of the image laterally.

**Revendications**

1. Système optique (19) à insérer dans un appareil de projection pour permettre d'examiner une image projetée sur un plan image (13) sans affecter sa qualité, sa grandeur ou sa position comportant un élément diviseur de faisceau (15; 15a) disposé sur le trajet optique de la lumière avant le plan image (13) de façon que ledit élément diviseur de faisceau (15; 15a) transmette le rayonnement au plan image (13) et réfléchisse une partie du rayonnement réfléchi à partir du plan image (13) dans une direction qui permette l'examen, et un moyen (21, 23; 21, 23a) disposé sur ledit trajet optique pour corriger le décalage d'image et les aberrations provoquées par ledit élément (15; 15a) diviseur de faisceau, et ladite optique (19) ayant un grossissement égal à l'unité, caractérisé en ce que ledit moyen correcteur de décalage d'image et d'aberrations comporte un premier et un second éléments de lentille ménisque (21, 23; 21, 23a) dont les surfaces concaves se font face et en ce que ledit système optique (19) est afocal.

2. Système optique selon la revendication 1, caractérisé en ce qu'un élément de plaque parallèle à plan inclinable (27) est disposé entre les éléments de ménisque (21, 23a) pour adjuster latéralement la position de l'image.

3. Système optique selon la revendication 1, dans lequel chaque élément (21, 23, 23a, 27) du système optique est afocal de sorte que le système optique (19) conserve un grossissement égal à l'unité et est insensible à des modifications de l'écartement entre les éléments (21, 23, 23a, 27).

4. Système optique selon l'une des revendications 1 à 3, dans lequel ledit élément diviseur de faisceau (15) est disposé sur le trajet optique entre ledit plan image (13) et lesdits éléments de lentille ménisque (21, 23).

5. Système optique selon l'une des revendications 1 à 3, dans lequel ledit élément diviseur de faisceau (15a) est disposé sur le trajet optique entre lesdits éléments de lentille ménisque (21, 23a).

6. Système optique selon la revendication 2, dans lequel ledit élément diviseur de faisceau (15a) est disposé sur le trajet optique entre ladite plaque parallèle à plan inclinable (27) et le second élément de lentille ménisque (23a).

7. Système optique selon la revendication 6, dans lequel ledit système optique (19) est caractérisé par les données de construction suivantes:

| Numéro de surface | Rayon (mm) | Epaisseur de verre (mm) | Type de verre | Indice de réfraction 0,5600$\mu$m | 0,5200$\mu$m | 0,6000$\mu$m | Ecart d'air (mm) |
|---|---|---|---|---|---|---|---|
| S1 | 24,48(cx) | 3,93 | BK-7 | 1,5180 | 1,5202 | 1,5163 | |
| S2 | 23,14(cc) | | | | | | 28,97 |
| S3 | ∞ (plane) | 2,00 | F-2 | 1,6226 | 1,6272 | 1,6190 | |
| S4 | ∞ (plane) | | | | | | 8,74 |
| S5 | ∞ (plane) | 7,00 | F-2 | 1,6226 | 1,6272 | 1,6190 | |
| S6 | ∞ (plane) | | | | | | 2,26 |
| S7 | 14,72(cc) | 2,50 | BK-7 | 1,5180 | 1,5202 | 1,5163 | |
| S8 | 15,57(cx) | | | | | | 3,00 |

Domaine spectral 0,5200$\mu$m$\leqslant\lambda\leqslant$0,6000$\mu$m et distance de S1 au plan image=58,4mm
et distance de S8 au plan image=3,0mm

8. Système de microprojection pour la formation d'une image d'un masque sur une plaquette photosensible comportant un élément diviseur de faisceau (15, 15a) disposé sur le trajet optique de la lumière avant le plan image (13) de façon que ledit élément diviseur de faisceau (15, 15a) transmette le rayonnement au plan image (13) et réfléchisse une partie du rayonnement réfléchi à partir du plan image (13) dans une direction qui permette l'examen, caractérisé en ce que des premier et second éléments de lentille ménisque (21, 23; 21, 23a) sont prévus ayant leurs surfaces concaves se faisant face et étant disposés sur le trajet optique pour corriger le décalage de l'image et les aberrations provoquées par ledit élément diviseur de faisceau (15; 15a) et chacun desdits éléments étant afocal.

9. Système de microprojection selon la revendication 8, caractérisé en ce que ledit élément diviseur de faisceau (15a) est disposé sur le trajet optique entre lesdits éléments de lentille ménisque (21, 23a), et en ce qu'un élément de plaque parallèle à plan inclinable (27) est disposé sur le trajet optique entre la première lentille ménisque (21) et l'élément diviseur de faisceau (15a) pour ajuster latéralement la position de l'image.

**Patentansprüche**

1. Optisches System (19) zum Einsetzen in ein Projektionsgerät, um die Betrachtung eines in eine Bildebene (13) projizierten Bildes ohne Beeinträchtigung dessen Qualität, Größe oder Lage zu ermöglichen, it einem Strahlteilerelement (15; 15a), welches im optischen Strahlengang des Lichtes vor der Bildebene (13) so angeordnet ist, daß das Strahlteilerelement (15; 15a) die Strahlung zu der Bildebene (13) überträgt und einen Teil der von der Bildebene (13) reflektierten Strahlung in eine eine Betrachtung erlaubende Richtung reflektiert, sowie mit einer Einrichtung (21, 23; 21, 23a), die in dem optischen Strahlengang angeordnet ist, um eine Bildverschiebung und Aberrationen zu korrigieren, welche durch das Strahlteilerelement (15; 15a) hervorgerufen sind, wobei das optische System (19) Einheitsvergrößerung aufweist, dadurch gekennzeichnet, daß die Einrichtung zum Korrigieren von Bildverschiebung und Aberrationen erste und zweite Meniskuslinsenelemente (21, 23; 21, 23a) umfaßt, deren konkave Flächen einander zugewandt sind, und daß das optische System (19) afokal ist.

2. Optisches System nach Anspruch 1, dadurch gekennzeichnet, daß ein verschwenkbares planparalleles Plattenelement (27) zwischen den Meniskuselementen (21, 23a) zur seitlichen Einstellung der Lage des Bildes angeordnet ist.

3. Optisches System nach Anspruch 1, dadurch gekennzeichnet, daß jedes Element (21, 23, 23a, 27) des optischen Systems afokal ist, so daß das optische System (19) die Einheitsvergrößerung aufrechterhält und gegenüber Abstandsänderungen zwischen den Elementen (21, 23, 23a, 27) unempfindlich ist.

4. Optisches System nach einem der Ansprüche 1 bis 3, dadurch gekennzeichnet, daß das Strahlteilerelement (15) in dem optischen Strahlengang zwischen der Bildebene (13) und den Meniskuslinsenelementen (21, 23) angeordnet ist.

5. Optisches System nach einem der Ansprüche 1 bis 3, dadurch gekennzeichnet, daß das Strahlteilerelement (15a) in dem optischen Strahlengang zwischen den Meniskuslinsenelementen (21, 23a) angeordnet ist.

6. Optisches System nach Anspruch 2, dadurch gekennzeichnet, daß das Strahlteilerelement (15a) in dem optischen Strahlengang zwischen der verschwenkbaren planparallelen Platte (27) und dem zweiten Meniskuslinsenelement (23a) angeordnet ist.

7. Optisches System nach Anspruch 6, dadurch gekennzeichnet, daß das optische System (19) die folgenden Konstruktionsdaten aufweist:

| Nummer der oberfläche | Radius (mm) | Glasdicke (mm) | Art des glases | Brechungsindex .5600$\mu$m | .5200$\mu$m | .6000$\mu$m | Luft-abstand (mm) |
|---|---|---|---|---|---|---|---|
| S1 | 24.48(cx) | 3.93 | BK-7 | 1.5180 | 1.5202 | 1.5163 | |
| S2 | 23.14(cc) | | | | | | 28.97 |
| S3 | ∞ (eben) | 2.00 | F-2 | 1.6226 | 1.6272 | 1.6190 | |
| S4 | ∞ (eben) | | | | | | 8.74 |
| S5 | ∞ (eben) | 7.00 | F-2 | 1.6226 | 1.6272 | 1.6190 | |
| S6 | ∞ (eben) | | | | | | 2.26 |
| S7 | 14.72(cc) | 2.50 | BK-7 | 1.5180 | 1.5202 | 1.5163 | |
| S8 | 15.57(cx) | | | | | | 3.00 |

Spektralbereich .5200$\mu$m$\leq\lambda\leq$.6000$\mu$m und Abstand von S1 zur Bildebene=58.4mm und Abstand von S8 zur Bildebene=3.0mm.

8. Mikroprojektionssystem zum Erzeugen eines Bildes einer Maske auf einer lichtempfindlichen Halbleiterplatte, mit einem Strahlteilerelement (15, 15a), welches in dem optischen Strahlengang des Lichtes vor der Bildebene (13) so angeordnet ist, daß das Strahlteilerelement (15, 15a) die Strahlung zu der Bildebene (13) überträgt und einen Teil der von der Bildebene (13) reflektierten Strahlung in eine eine Betrachtung erlaubende Richtung reflektiert, dadurch gekennzeichnet, daß erste und zweite Meniskuslinsenelemente (21, 23; 21, 23a) vorgesehen sind, deren konkave Flächen einander zugewandt sind und die in dem optischen Strahlengang angeordnet sind, um Bildverschiebung und Aberrationen zu korrigieren, die durch das Strahlteilerelement (15; 15a) hervorgerufen werden, und daß jedes der Elemente afokal ist.

9. Mikroprojektionssystem nach Anspruch 8, dadurch gekennzeichnet, daß das Strahlteilerelement (15a) in dem optischen Strahlengang zwischen den Meniskuslinsenelementen (21, 23a) angeordnet ist und daß ein verschwenkbares, planparalleles Plattenelement (27) in dem optischen Strahlengang zwischen der ersten Meniskuslinse (21) und dem Strahlteilerelement (15a) angeordnet ist, um die Lage des Bildes seitlich einzustellen.

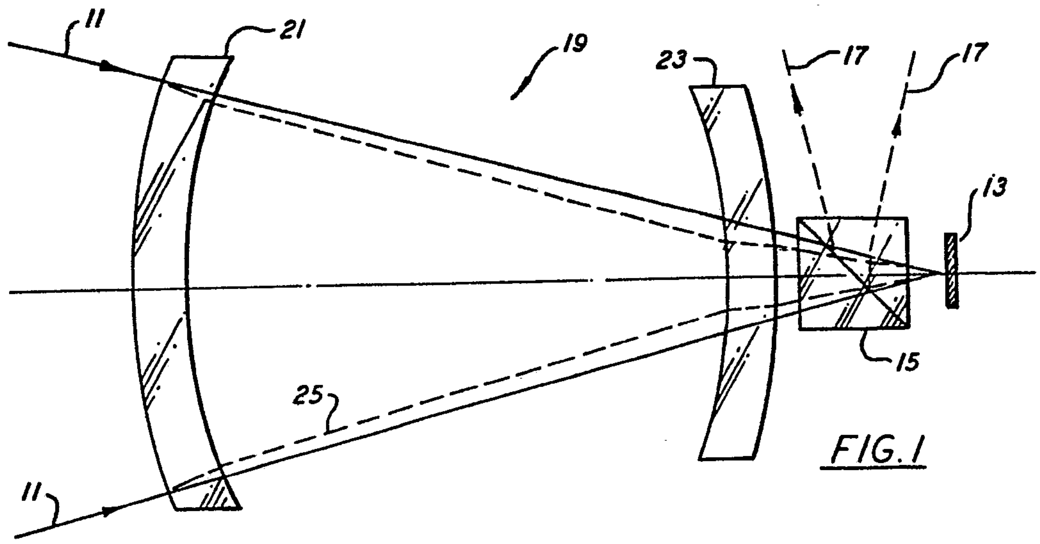


FIG. 1

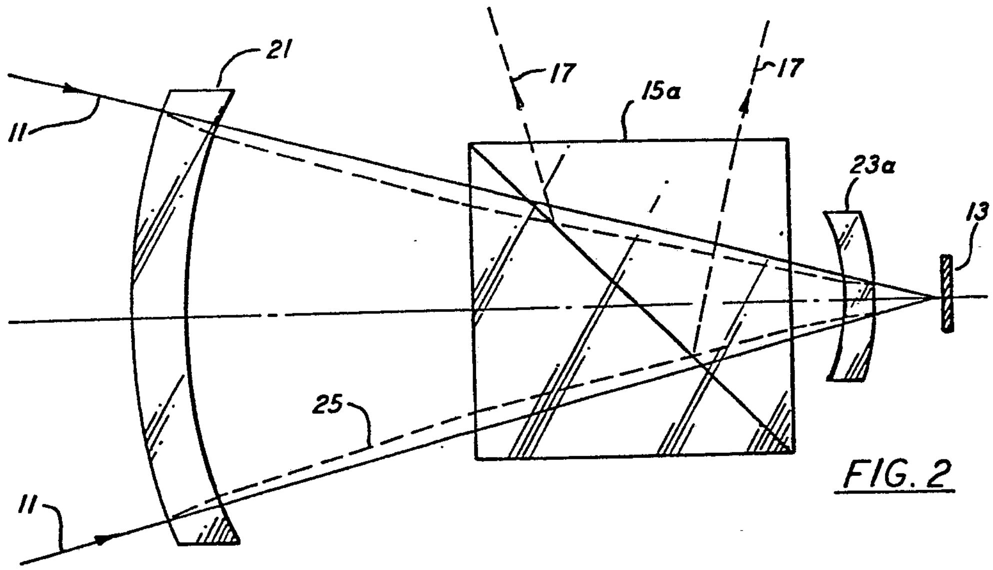


FIG. 2

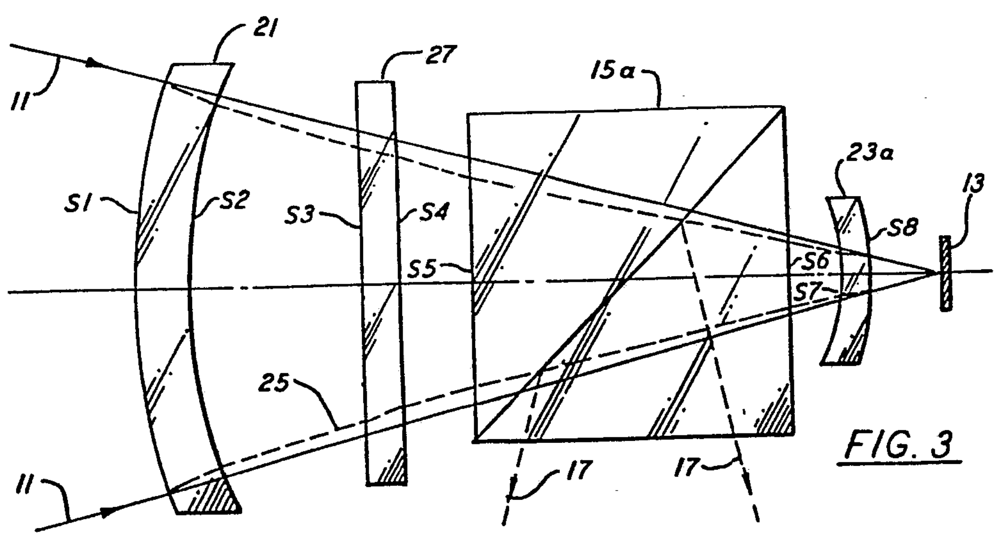


FIG. 3